(19) Europäisches Patentamt
European Patent Office
Office européen des brevets

(11) EP 0 425 009 B1

(12) EUROPEAN PATENT SPECIFICATION

(45) Date of publication and mention of the grant of the patent:
**02.01.1997 Bulletin 1997/01**

(51) Int Cl.[6]: **C08G 67/02**, B01J 31/16, B01J 31/02

(21) Application number: **90202701.0**

(22) Date of filing: **11.10.1990**

# (54) Catalyst compositions

Katalytische Zusammensetzungen

Compositions catalytiques

(84) Designated Contracting States:
**BE DE FR GB IT NL**

(30) Priority: **26.10.1989 NL 8902655**

(43) Date of publication of application:
**02.05.1991 Bulletin 1991/18**

(73) Proprietor: **SHELL INTERNATIONALE RESEARCH MAATSCHAPPIJ B.V.**
**2596 HR Den Haag (NL)**

(72) Inventors:
- **Van Broekhoven, Johannes Adrianus Maria**
  **NL-1031 CM Amsterdam (NL)**
- **Gautier, Pieter Antoine**
  **NL-1031 CM Amsterdam (NL)**
- **Drent, Eit**
  **NL-1031 CM Amsterdam (NL)**
- **Miedema, Wiebren Age**
  **NL-4791 RK Klundert (NL)**

(56) References cited:
**EP-A- 0 257 663**
**EP-A- 0 301 664**
**EP-A- 0 361 623**
**EP-A- 0 393 790**

Remarks:
The file contains technical information submitted after the application was filed and not included in this specification

EP 0 425 009 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

The invention relates to novel catalyst compositions suitable for application in the preparation of polymers of carbon monoxide with one or more olefinically unsaturated compounds; and to a process using these compositions.

Linear polymers of carbon monoxide with one or more olefinically unsaturated compounds, in which polymers the units from the carbon monoxide on the one hand and the units from the olefinically unsaturated compounds on the other hand are present in a substantially alternating arrangement, can be prepared by contacting the monomers at elevated temperature and pressure with a solution of a catalyst composition in a diluent in which the polymers are almost or completely insoluble and which catalyst composition is based on:

a) a Group VIII metal compound,
b) a source of an anion of a carboxylic acid and
c) a bidentate ligand that can form a complex with the Group VIII metal via two phosphorus, nitrogen or sulphur-containing dentate groups contained in the bidentate ligand.

Such a preparation is known from e.g. European Patent Specification EP-B-181014 (and many others) by the present Applicant, describing the subject copolymerisation in the presence of catalyst compositions comprising as component a) a compound of palladium, nickel or cobalt, as component c) a bidentate phosphorus, arsenic or antimony ligand, and as component b) an anion of a carboxylic acid. A similar process using a catalyst composition based on a nitrogen bidentate ligand is known from e.g. EP-A-229408, and copolymerisations in the presence of catalyst compositions based on sulphur-containing bidentate ligands are the subject of e.g. (non-prepublished) EP-A-343734 or EPA-345847.

It should be noted that in all these disclosures of catalyst compositions based on the above mentioned components a), b) and c), the only anion sources specifically disclosed and exemplified are the acids themselves and various salts thereof. Alternative anion sources such as acid halides, amides, esters (including cyclic esters or lactones) or anhydrides, although either directly or indirectly covered by the patent claims, have not been used or described before in the said catalyst compositions for the preparation of polymers of carbon monoxide and one or more olefinically unsaturated compounds.

During the polymerization, the polymers are obtained in the form of a suspension in the diluent. A problem with the above-described polymer preparation is fouling of the reactor. During the polymerization, some of the formed polymers deposit on the reactor components below the surface of the liquid, such as the reactor wall, the baffles, the stirrer shaft, the stirrer blades, the cooling and heating coils and the dip tubes. These polymer deposits remain in the reactor after the polymer suspension has left the reactor and cannot be removed by washing the reactor with diluent. In some cases the reactor fouling can be very serious and, when carrying out the polymerisation on a commercial scale, can in extreme cases amount to 40%, i.e. only about 60% of the prepared polymers leaves the reactor in the form of a suspension, while about 40% remains behind as a deposit on the reactor components. This reactor fouling can constitute a serious obstacle to the application of the polymerisation on a commercial scale.

In the past, the Applicant found that the reactor fouling could be reduced somewhat by polishing the surfaces on which the polymers deposited or by coating them with certain materials, such as polypropylene, polytetrafluoroethylene or polyamide. Although these measures can bring about a slight reduction in the reactor fouling, they are not an effective means of controlling the fouling problem.

As a result of continued research into this problem, it has now been found that the reactor fouling can be effectively controlled by selecting as the source of the anion of the carboxylic acid in the catalyst composition as component b) an alkyl ester or anhydride of such an acid, instead of the acid itself or a salt thereof, as done up to now. It has also been found that the polymerization activity of the catalyst composition increases considerably as a result of this substitution.

Published European patent application EP-A-253416 relates to catalyst compositions which are suitable for use in the preparation of the present alternating polymers. According thereto a catalyst composition is proposed based upon: a) a palladium compound, b1) a main group metal salt of a non-hydrohalogenic acid having a $pK_A$ below 2, b2) a ketone or an ester, and c) a bidentate ligand of the formula $R^1R^2$-P-R-P-$R^3R^4$ (in which formula $R^1$, $R^2$, $R^3$ and $R^4$ represent optionally polar-substituted hydrocarbyl groups and R represents a bivalent organic bridging group having at least two carbon atoms in the bridge). Component b1) can be used in a quantity of 0.5 to 200 equivalents per gram atom palladium. Working examples 3 and 10 disclose compositions based upon palladium acetate, 1,3-bis(diphenylphosphino)propane and potassium para-tosylate or antimony sulphate, respectively, as component b1), and both having ethylene glycol diacetate, i.e. an alkylene diester, as component b2). Compositions containing alkyl esters are not described as having been made. The purpose of the addition of an ester or a ketone is said to be to increase the activity of the catalyst composition which is insufficient as a result of the use of a main group metal salt.

Published European patent application EP-A-301664 is concerned with improvements in the polymerization process with respect to the molecular weight and the bulk density of the polymer produced and the polymerization rate. This application contains a comparative example disclosing the polymerization of carbon monoxide with ethene using a catalyst composition based on palladium acetate, para-toluenesulphonic acid in a quantity of 2.0 equivalents per gram atom palladium, 1,3-bis(diphenylphosphino)propane in a quantity of 1.2 mol per mol palladium acetate and methyl propionate in a quantity of 11,800 1 per mol palladium acetate.

The problem of reactor fouling is not mentioned in EP-A-253416 and EP-A-301664, and thus the presently found measure of selecting an alkyl ester for reducing reactor fouling, which measure is not related to the presence or absence of main group metal salts, is not taught or inferred by these documents. The composition and process known from the said EP-A-301664 are formally excluded from the present application.

The present patent application therefore relates to new catalyst compositions based on:

a) a Group VIII metal compound,
b) a source of an anion of a carboxylic acid, and
c) a bidentate ligand that can form a complex with the Group VIII metal via two phosphorus, nitrogen or sulphur-containing groups present in the bidentate ligand,

characterised in that as component b) an alkyl ester or an anhydride of a carboxylic acid is used, with the proviso that the composition known from EP-A-301664 is excluded.

The patent application further relates to the application of these catalyst compositions in the preparation of polymers of carbon monoxide with one or more olefinically unsaturated compounds.

In particular the present invention concerns a catalyst composition as defined above, characterised in that as component b) an anhydride of a carboxylic acid is used, if simultaneously component a) is a palladium compound and component c) is a bidentate ligand of the formula $R^1R^2$-P-R-P-$R^3R^4$ (in which formula $R^1$, $R^2$, $R^3$ and $R^4$ represent optionally polar-substituted hydrocarbyl groups and R represents a bivalent organic bridging group having at least two carbon atoms in the bridge), and if furthermore potassium para-tosylate or antimony sulphate (more generally, a main group metal salt of a non-hydrohalogenic acid having a pKa below 2), is present in a catalytically active amount. The expression "a catalytically active amount" suitably refers to the range of 0.5 to 200 equivalents/gat Pd.

In this patent application, Group VIII metals are understood to be the noble metals ruthenium, rhodium, palladium, osmium, iridium and platinum, as well as the iron group metals iron, cobalt and nickel. The catalyst compositions according to the invention preferably contain a Group VIII metal selected from palladium, nickel and cobalt. Palladium is particularly preferred as Group VIII metal. The Group VIII metal is preferably incorporated in the catalyst compositions in the form of a salt of a carboxylic acid, in particular in the form of an acetate.

Examples of alkyl esters which can be used as component b) in the catalyst compositions according to the invention are alkyl esters of monocarboxylic acids and alkyl esters of dicarboxylic acids. Alkyl esters with no more than four carbon atoms per alkyl group are preferred and in particular methyl esters. As regards the anhydrides that can be used as component b), both anhydrides of monocarboxylic acids and anhydrides of dicarboxylic acids are suitable. Preferably, an alkyl ester or anhydride derived from a carboxylic acid with a pKa of less than 2 is employed as component b) in the catalyst compositions according to the invention. Alkyl esters and anhydrides derived from a halogen-substituted carboxylic acid and in particular from a fluorine-substituted carboxylic acid are also preferred. Examples of suitable compounds which can be employed as component b) in the catalyst compositions according to the invention are methyl and ethyl esters as well as anhydrides of difluoroacetic acid, trifluoroacetic acid, pentafluoropropionic acid and heptafluorobutyric acid and dimethyl and diethyl esters as well as anhydrides of tetrafluorosuccinic acid, hexafluoroglutaric acid and octafluoroadipic acid. The use of methyltrifluoroacetate and hexafluoroglutaric acid anhydride as component b) is preferred. Component b) is preferably present in the catalyst compositions in a quantity of 1-100 mol and in particular 2-50 mol per mol Group VIII metal. If desired, the components a) and b) can be incorporated in the catalyst composition combined in a single compound by the use of a Group VIII metal salt of a dicarboxylic acid semi ester.

If in the catalyst compositions according to the invention component c) consists of a bidentate ligand that can form a complex with component a) via two sulphur-containing dentate groups contained in the bidentate ligand, preference is given to a component c) with the general formula $R^1$S-R-S$R^1$ in which $R^1$ represents an optionally polar-substituted hydrocarbyl group and R represents a divalent organic bridging group containing at least two carbon atoms in the bridge. Examples of such compounds are 1,2-bis(ethylthio)ethane, cis-1,2-bis(benzylthio)ethene and 1,2-bis(phenylthio)propane.

If in the catalyst compositions according to the invention component c) consists of a bidentate ligand that can form a complex with component a) via two nitrogen-containing dentate groups contained in the bidentate ligand, preference is given to a component c) with the general formula

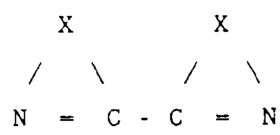

where X represents an organic bridging group containing three or four atoms in the bridge, of which at least two are carbon atoms. Examples of nitrogen containing bidentate ligands are 2,2'-bipyridine and 1,10-phenanthroline.

Preferably, in the catalyst compositions according to the invention component c) consists of a bidentate ligand that can form a complex with component a) via two phosphorus-containing dentate groups contained in the bidentate ligand. If such a bidentate ligand is used as component c), preference is further given to a compound with the general formula $(R^1)_2P\text{-}R\text{-}P(R^1)_2$, in which R and $R^1$ have the previously indicated meanings. In this case, particular preference is given to a compound in which $R^1$ represents an aryl group, which contains an alkoxy group as a substituent, at an ortho position relative to the phosphorus atom to which it is linked, and in which R contains three atoms in the bridge. An example of such a compound is 1,3-bis[bis(2-methoxyphenyl)phosphino]propane.

If in the catalyst compositions according to the invention component c) consists of a bidentate ligand that can form a complex with component a) via two sulphur- or nitrogen-containing dentate groups contained in the bidentate ligand, the quantity used is preferably 0.5-100 and in particular 1-50 mol per mol Group VIII metal. If a bidentate ligand is used that can form a complex with component a) via two phosphorus-containing dentate groups contained in the bidentate ligand, the quantity used is preferably 0.5-2 and in particular 0.75-1.5 mol per mol Group VIII metal.

To enhance the activity of the catalyst compositions according to the invention, said catalyst compositions can also include 1,4-quinone as a component d). For this purpose 1,4-benzoquinone and 1,4-naphthoquinone are very suitable. The quantity of the 1,4-quinone used is preferably 5-5000 and in particular 10-1000 mol per mol Group VIII metal.

Examples of olefinically unsaturated compounds which, with the use of the catalyst compositions according to the invention, can be polymerized with carbon monoxide include compounds consisting exclusively of carbon and hydrogen, as well as compounds which in addition to carbon and hydrogen also contain one or more heteroatoms. The catalyst compositions are preferably employed for the preparation of polymers of carbon monoxide with one or more olefinically unsaturated hydrocarbons. Examples of suitable hydrocarbon monomers are ethene and other $\alpha$-olefins such as propene, butene-1, hexene-1 and octene-1. The catalyst compositions are particularly very suitable for use in the preparation of copolymers of carbon monoxide with ethene and the preparation of terpolymers of carbon monoxide with ethene and another $\alpha$-olefin, in particular propene.

The quantity of catalyst composition used in the preparation of the polymers can vary within wide limits. Per mol of olefinically unsaturated compound to be polymerized, a quantity of catalyst is used which preferably contains $10^{-7}$ to $10^{-3}$ and in particular $10^{-6}$ to $10^{-4}$ mol Group VIII metal.

The polymerization is carried out by contacting the monomers at elevated temperature and pressure with a solution of the catalyst composition according to the invention in a diluent in which the polymers are almost or completely insoluble so that the polymers form a suspension in the diluent. Lower aliphatic alcohols such as methanol are very suitable as diluent.

The preparation of the polymers is preferably carried out at a temperature of 40 to 120°C and a pressure of 20 to 150 bar and in particular at a temperature of 50 to 100°C and a pressure of 30 to 100 bar. The molar ratio of the olefinically unsaturated compounds relative to carbon monoxide in the mixture to be polymerized is preferably 10:1 to 1:5 and in particular 5:1 to 1:2. The polymerization can be carried out either batchwise or continuously.

The invention will now be explained with reference to the following examples.

Example 1

A carbon monoxide/ethene/propene terpolymer was prepared as follows. 1.5 1 methanol was introduced into a mechanically stirred autoclave with a capacity of 4 1. The air in the autoclave was removed by forcing carbon monoxide into the autoclave to a pressure of 50 bar then releasing the pressure and then repeating this process a further two times. After the autoclave had been heated to 80°C, 20 bar carbon monoxide was forced in, followed by 7.5 bar propene and finally 15 bar ethene. Subsequently, a catalyst solution was introduced into the autoclave consisting of:

10 ml acetone,
0.016 mmol palladium acetate,
0.32 mmol trifluoroacetic acid, and
0.017 mmol 1,3-bis[bis(2-methoxyphenyl)phosphino]propane.

The pressure in the autoclave was maintained by forcing in a 1:1 carbon monoxide/ethene mixture. After 12 hours the polymerization was ended by cooling to room temperature and releasing the pressure.

A polymer suspension containing 16 g terpolymer was obtained. 29 g terpolymer remained behind in the autoclave. The reactor fouling in this experiment was therefore

$$\frac{29}{16 + 29} \times 100\% = 64\%$$

The polymerization rate was 2.2 kg terpolymer/(g palladium.hour).

Example 2

A carbon monoxide/ethene/propene terpolymer was prepared in a virtually analogous manner as in example 1, but with the following differences:

a) a catalyst solution was used having the following composition:

10 ml acetone,
0.02 mmol palladium acetate,
0.4 mmol methyl trifluoroacetate, and
0.021 mmol 1,3-bis[bis(2-methoxyphenyl)phosphino]propane, and

b) the reaction time was 17.5 hours instead of 12 hours.

A polymer suspension containing 105.5 g terpolymer was obtained. The reactor fouling was less than 0.1%. The polymerization rate was 2.8 kg terpolymer/(g palladium.hour).

Example 3

A carbon monoxide/ethene copolymer was prepared in a virtually analogous manner as the terpolymer in example 1, but with the following differences:

a) 27 bar carbon monoxide was forced into the autoclave, followed by 31 bar ethene (i.e. no propene),
b) a catalyst solution was used having the following composition:

10 ml acetone,
0.02 mmol palladium acetate,
0.4 mmol trifluoroacetic acid, and
0.021 mmol 1,3-bis[bis(2-methoxyphenyl)phosphino]propane, and

c) the reaction time was 21 hours instead of 12 hours.

A polymer suspension containing 46 g copolymer was obtained. 146 g copolymer remained behind in the autoclave. The reactor fouling in this experiment was therefore 76 %. The polymerization rate was 4.3 kg copolymer/(g palladium. hour).

Example 4

A carbon monoxide/ethene copolymer was prepared in a virtually analogous manner as in example 3, but with the following differences:

a) the catalyst solution contained 0.4 mmol methyltrifluoroacetate instead of trifluoroacetic acid, and
b) the reaction time was 4.7 hours instead of 21 hours.

A polymer suspension containing 110 g copolymer was obtained. The reactor fouling was less than 0.1%. The polymerization rate was 11 kg copolymer/(g palladium.hour).

Example 5

A carbon monoxide/ethene/propene terpolymer was prepared in a virtually analogous manner as in example 1, but with the following differences:

a) the autoclave had a capacity of 1.5 l and 500 ml methanol was introduced,
b) 20 bar carbon monoxide, 14 bar propene and 22 bar ethene were successively forced into the autoclave,
c) a catalyst solution was used having the following composition:

5 ml acetone,
0.01 mmol palladium acetate,
0.20 mmol trifluoroacetic acid, and
0.011 mmol 1,3-bis[bis(2-methoxyphenyl)phosphino]propane and

d) the reaction time was 5.7 hours instead of 12 hours.

A polymer suspension containing 2.4 g terpolymer was obtained. 16 g terpolymer remained behind in the autoclave. The reactor fouling in this experiment was therefore 87%. The polymerization rate was 3.1 kg copolymer/(g palladium. hour).

Example 6

A carbon monoxide/ethene/propene terpolymer was prepared in a virtually analogous manner as in example 5, but with the following differences:

a) the catalyst solution contained 0.20 mmol methyltrifluoroacetate instead of trifluoroacetic acid, and
b) the reaction time was 3.2 hours instead of 5.7 hours.

A polymer suspension containing 14.6 g terpolymer was obtained. 0.3 g terpolymemr remained behind in the reactor. The reactor fouling in this experiment was therefore 2%. The polymerisation rate was 4.4 kg terpolymer/(g palladium.hour).

Of the examples 1-6, examples 2, 4 and 6 are according to the invention. In these examples catalyst compositions according to the invention were used which contained methyltrifluoroacetate as component b). Examples 1, 3 and 5 fall outside the scope of the invention and are included in the patent application for purposes of comparison. In these examples catalyst compositions were used which contained trifluoroacetic acid as component b).
$^{13}C$-NMR analysis was applied to each of the polymers prepared according to examples 1-6. The findings are summarized below:

1) The polymers prepared according to examples 1-6 had a linear structure.
2) In the carbon monoxide/ethene copolymers prepared according to examples 3 and 4, the units from carbon monoxide on the one hand and the units from ethene on the other hand were present in a substantially alternating arrangement.
3) In the carbon monoxide/ethene/propene terpolymers prepared according to examples 1, 2, 5 and 6, the units from carbon monoxide on the one hand and the units from ethene and propene on the other hand were present in a substantially alternating arrangement.
4) In the carbon monoxide/ethene/propene terpolymers prepared according to examples 1, 2, 5 and 6, the polymer fragments consisting of a CO-$C_2H_4$ unit and the polymer fragments consisting of a CO-$C_3H_6$ unit were present in a substantially random arrangement in the polymer chains.

The favourable effect on reactor fouling and polymerization activity that occurs, if according to the invention, the monocarboxylic acid used as component b) in the catalyst composition is replaced by a methyl ester of the acid can be clearly seen if the results of examples 1, 3 and 5 are compared with those of examples 2, 4 and 6 respectively, as summarized in the following table.

Table 1

| Example No. | Reactor fouling % | Polymer activity kg polymer/(g palladium.hour) |
|---|---|---|
| 1 | 64 | 2.2 |

Table 1 (continued)

| Example No. | Reactor fouling % | Polymer activity kg polymer/(g palladium.hour) |
|---|---|---|
| 2 | < 0.1 | 2.8 |
| 3 | 76 | 4.3 |
| 4 | < 0.1 | 11 |
| 5 | 87 | 3.1 |
| 6 | 2 | 4.4 |

## Claims

**1.** Catalyst compositions for the polymerization of carbon monoxide with one or more olefinically unsaturated compounds, which compositions are based on:

a) a Group VIII metal compound,
b) a source of an anion of a carboxylic acid, and
c) a bidentate ligand that can form a complex with the Group VIII metal via two phosphorus, nitrogen or sulphur-containing groups present in the bidentate ligand,

characterized in that as component b) an alkyl ester or an anhydride of a carboxylic acid is used, with the proviso that the catalyst composition is not based on palladium acetate, para-toluenesulphonic acid in a quantity of 2.0 equivalents per gram atom palladium, 1,3-bis(diphenylphosphino)propane in a quantity of 1.2 mol per mol palladium acetate and methyl propionate in a quantity of 11,800 1 per mol palladium acetate.

**2.** Catalyst compositions in accordance with claim 1, characterized in that as component b) an anhydride of a carboxylic acid is used, if simultaneously component a) is a palladium compound and component c) is a bidentate ligand of the formula $R^1R^2$-P-R-P-$R^3R^4$, in which formula $R^1$, $R^2$, $R^3$ and $R^4$ represent optionally polar-substituted hydrocarbyl groups and R represents a bivalent organic bridging group having at least two carbon atoms in the bridge, and if furthermore potassium para-tosylate or antimony sulphate is present in an amount of 0.5 to 200 equivalents per gram atom palladium.

**3.** Catalyst compositions in accordance with claim 1, characterized in that as component b) an anhydride of a carboxylic acid is used, if simultaneously component a) is a palladium compound and component c) is a bidentate ligand of the formula $R^1R^2$-P-R-P-$R^3R^4$, in which formula $R^1$, $R^2$, $R^3$ and $R^4$ represent optionally polar-substituted hydrocarbyl groups and R represents a bivalent organic bridging group having at least two carbon atoms in the bridge, and if furthermore a main group metal salt of a non-hydrohalogenic acid having a pKa below 2 is present in an amount of 0.5 to 200 equivalents per gram atom palladium.

**4.** Catalyst compositions in accordance with one or more of claims 1-3, characterized in that they are based on an alkyl ester or anhydride of a carboxylic acid with a pKa of less than 2 as component b).

**5.** Catalyst compositions in accordance with one or more of claims 1-4, characterized in that they are based on an alkyl ester or anhydride of a halogen-substituted carboxylic acid as component b).

**6.** Catalyst compositions in accordance with claim 5, characterized in that they are based on an alkyl ester or anhydride of a fluorine-substituted carboxylic acid as component b).

**7.** Catalyst compositions in accordance with one or more of claims 1-6, characterized in that they are based on an alkyl ester of a carboxylic acid with no more than four carbon atoms per alkyl group as component b).

**8.** Catalyst compositions in accordance with claim 7, characterized in that they are based on a methyl ester of a carboxylic acid as component b).

**9.** Catalyst compositions in accordance with one or more of claims 1-8, characterized in that they contain 1-100 mol component b) per mol Group VIII metal.

**10.** Process for the preparation of polymers, characterized in that a mixture of carbon monoxide with one or more olefinically unsaturated compounds is contacted at a temperature of 40 to 120°C and a pressure of 20 to 150 bar with a solution of a catalyst composition in accordance with one or more of claims 1-9 in a diluent in which the polymers form a suspension.

**11.** Process in accordance with claim 10, characterized in that it is carried out at a temperature of 50 to 100°C, a pressure of 30 to 100 bar and a molar ratio of the olefinically unsaturated compounds relative to carbon monoxide in the mixture to be polymerized of 10:1 to 1:5 and using a quantity of catalyst containing $10^{-7}$ to $10^{-3}$ mol Group VIII metal per mol of olefinically unsaturated compound to be polymerized.

**Patentansprüche**

**1.** Katalysatorzusammensetzungen zur Polymerisation von Kohlenmonoxid und einer oder mehreren olefinisch ungesättigten Verbindungen, basierend auf:

a) einer Verbindung eines Metalls der Gruppe VIII,
b) einer Quelle eines Anions einer Carbonsäure und
c) einem zweizähnigen Liganden, der über zwei darin vorliegende phosphor-, stickstoff- oder schwefelhaltige Gruppen mit dem Metall der Gruppe VIII einen Komplex bilden kann,

dadurch gekennzeichnet, daß als Komponente b) ein Alkylester oder ein Anhydrid einer Carbonsäure verwendet wird, mit der Maßgabe, daß die Katalysatorzusammensetzung nicht auf Palladiumacetat, para-Toluolsulfonsäure in einer Menge von 2,0 Äquivalenten pro Grammatom Palladium, 1,3-Bis(diphenylphosphino)propan in einer Menge von 1,2 mol pro Mol Palladiumacetat und Propionsäuremethylester in einer Menge von 11.800 l pro Mol Palladiumacetat basiert.

**2.** Katalysatorzusammensetzungen nach Anspruch 1, dadurch gekennzeichnet, daß als Komponente b) ein Anhydrid einer Carbonsäure verwendet wird, falls gleichzeitig Komponente a) eine Palladiumverbindung und Komponente c) ein zweizähniger Ligand der Formel $R^1R^2$-P-R-P-$R^3R^4$, worin $R^1$, $R^2$, $R^3$ und $R^4$ gegebenenfalls polar substituierte Kohlenwasserstoffgruppen bedeuten und R eine zweiwertige organische Brückengruppe mit mindestens zwei Kohlenstoffatomen in der Brücke bedeutet, ist, und falls ferner Kalium-para-tosylat oder Antimonsulfat in einer Menge von 0,5 bis 200 Äquivalenten pro Grammatom Palladium zugegen ist.

**3.** Katalysatorzusammensetzungen nach Anspruch 1, dadurch gekennzeichnet, daß als Komponente b) ein Anhydrid einer Carbonsäure verwendet wird, falls gleichzeitig Komponente a) eine Palladiumverbindung und Komponente c) ein zweizähniger Ligand der Formel $R^1R^2$-P-R-P-$R^3R^4$, worin $R^1$, $R^2$, $R^3$ und $R^4$ gegebenenfalls polar substituierte Kohlenwasserstoffgruppen bedeuten und R eine zweiwertige organische Brückengruppe mit mindestens zwei Kohlenstoffatomen in der Brücke bedeutet, ist, und falls ferner ein Hauptgruppenmetallsalz einer nicht zu den Halogenwasserstoffsäuren gehörenden Säure mit einem pKa-Wert unter 2 in einer Menge von 0,5 bis 200 Äquivalenten pro Grammatom Palladium zugegen ist.

**4.** Katalysatorzusammensetzungen nach einem oder mehreren der Ansprüche 1-3, dadurch gekennzeichnet, daß sie auf einem Alkylester oder einem Anhydrid einer Carbonsäure mit einem pKa-Wert unter 2 als Komponente b) basieren.

**5.** Katalysatorzusammensetzungen nach einem oder mehreren der Ansprüche 1-4, dadurch gekennzeichnet, daß sie auf einem Alkylester oder einem Anhydrid einer halogensubstituierten Carbonsäure als Komponente b) basieren.

**6.** Katalysatorzusammensetzungen nach Anspruch 5, dadurch gekennzeichnet, daß sie auf einem Alkylester oder einem Anhydrid einer fluorsubstituierten Carbonsäure als Komponente b) basieren.

**7.** Katalysatorzusammensetzungen nach einem oder mehreren der Ansprüche 1-6, dadurch gekennzeichnet, daß sie auf einem Alkylester einer Carbonsäure mit bis zu vier Kohlenstoffatomen pro Alkylgruppe als Komponente b) basieren.

**8.** Katalysatorzusammensetzungen nach Anspruch 7, dadurch gekennzeichnet, daß sie auf einem Methylester einer

Carbonsäure als Komponente b) basieren.

**9.** Katalysatorzusammensetzungen nach einem der Ansprüche 1-8, dadurch gekennzeichnet, daß sie 1-100 mol Komponente b) pro Mol Metall der Gruppe VIII enthalten.

**10.** Verfahren zur Herstellung von Polymeren, dadurch gekennzeichnet, daß man ein Gemisch aus Kohlenmonoxid und einer oder mehreren olefinisch ungesättigten Verbindungen bei einer Temperatur von 40 bis 120°C und einem Druck von 20 bis 150 bar mit einer Lösung einer Katalysatorzusammensetzung gemäß einem oder mehreren der Ansprüche 1-9 in einem Verdünnungsmittel, in dem die Polymere eine Suspension bilden, in Berührung bringt.

**11.** Verfahren nach Anspruch 10, dadurch gekennzeichnet, daß man es bei einer Temperatur von 50 bis 100°C, einem Druck von 30 bis 100 bar und einem Molverhältnis der olefinisch ungesättigten Verbindungen und Kohlenmonoxid in dem zu polymerisierenden Gemisch von 10:1 bis 1:5 und unter Verwendung einer Katalysatormenge, die $10^{-7}$ bis $10^{-3}$ mol Metall der Gruppe VIII pro Mol zu polymerisierende olefinisch ungesättigte Verbindung enthält, durchführt.

**Revendications**

**1.** Compositions catalytiques pour la polymérisation du monoxyde de carbone avec un ou plusieurs composés oléfiniquement insaturés, lesquelles compositions sont basées sur :

a) un composé d'un métal du groupe VIII,
b) une source d'un anion d'un acide carboxylique, et
c) un ligand bidentate qui peut former un complexe avec le métal du groupe VIII par l'intermédiaire de deux radicaux contenant du phosphore, de l'azote ou du soufre, présents dans le ligand bidentate, caractérisées en ce que, à titre de composant b), on utilise un ester alkylique ou un anhydride d'un acide carboxylique, avec la condition que la composition catalytique n'est pas basée sur de l'acétate de palladium, de l'acide para-toluènesulfonique, en une proportion de 2,0 équivalents par atome-gramme de palladium, du 1,3-bis(diphénylphosphino)propane en une proportion de 1,2 mole par mole d'acétate de palladium et du propionate de méthyle en une proportion de 11 800 litres par mole d'acétate de palladium.

**2.** Compositions catalytiques suivant la revendication 1, caractérisées en ce que, à titre de composant b), on utilise un anhydride d'un acide carboxylique si, simultanément, le composant a) est un composé du palladium et le composant c) est un ligand bidentate de la formule $R^1R^2$-P-R-P-$R^3R^4$, formule dans laquelle $R^1$, $R^2$, $R^3$ et $R^4$ représentent des radicaux hydrocarbyle à substitution polaire éventuelle et R représente un groupe de pontage organique bivalent comportant au moins deux atomes de carbone dans le pont, et si, en outre, du para-tosylate de potassium ou du sulfate d'antimoine est présent en une proportion de 0,5 à 200 équivalents par atome-gramme de palladium.

**3.** Compositions catalytiques suivant la revendication 1, caractérisées en ce que, à titre de composant b), on utilise un anhydride d'un acide carboxylique si, simultanément, le composant a) est un composé du palladium et le composant c) est un ligand bidentate de la formule $R^1R^2$-P-R-P-$R^3R^4$, formule dans laquelle $R^1$, $R^2$, $R^3$ et $R^4$ représentent des radicaux hydrocarbyle à substitution polaire éventuelle et R représente un groupe de pontage organique bivalent possédant au moins deux atomes de carbone dans le pont, et si, en outre, un sel de métal d'un groupe principal d'un acide non halogènehydrique possédant un pKa inférieur à 2 est présent en une proportion de 0,5 à 200 équivalents par atome-gramme de palladium.

**4.** Compositions catalytiques suivant une ou plusieurs des revendications 1 à 3, caractérisées en ce qu'elles sont basées sur un ester alkylique ou un anhydride d'un acide carboxylique possédant un pKa inférieur à 2 à titre de composant b).

**5.** Compositions catalytiques suivant une ou plusieurs des revendications 1 à 4, caractérisées en ce qu'elles sont basées sur un ester alkylique ou un anhydride d'un acide carboxylique à substitution halogénée à titre de composant b).

**6.** Compositions catalytiques suivant la revendication 5, caractérisées en ce qu'elles sont basées sur un ester alkylique ou un anhydride d'un acide carboxylique à substitution fluorée à titre de composant b).

7. Compositions catalytiques suivant une ou plusieurs des revendications 1 à 6, caractérisées en ce qu'elles sont basées sur un ester alkylique d'un acide carboxylique ne comportant pas plus de quatre atomes de carbone par groupe alkyle à titre de composant b).

8. Compositions catalytique suivant la revendication 7, caractérisées en ce qu'elles sont basées sur un ester méthylique d'un acide carboxylique à titre de composant b).

9. Compositions catalytiques suivant une ou plusieurs des revendications 1 à 8, caractérisées en ce qu'elles contiennent 1 à 100 moles de composant b) par mole de métal du groupe VIII.

10. Procédé de préparation de polymères, caractérisé en ce que l'on met un mélange de monoxyde de carbone et d'un ou plusieurs composés oléfiniquement insaturés en contact, à une température de 40 à 120°C et sous une pression de 20 à 150 bars avec une solution d'une composition catalytique suivant une ou plusieurs des revendications 1 à 9, dans un diluant dans lequel les polymères forment une suspension.

11. Procédé suivant la revendication 10, caractérisé en ce qu'on l'entreprend à une température de 50 à 100°C, sous une pression de 30 à 100 bars et avec un rapport molaire des composés oléfiniquemnt insaturés au monoxyde de carbone dans le mélange à polymériser de 10:1 à 1:5 et on utilise une proportion de catalyseur contenant $10^{-7}$ à $10^{-3}$ mole de métal du groupe VIII par mole de composé oléfiniquement insaturé à polymériser.